(19) Europäisches Patentamt
European Patent Office
Office européen des brevets

(11) Publication number: **0 217 501 B1**

(12) **EUROPEAN PATENT SPECIFICATION**

(45) Date of publication of patent specification: **31.07.91**

(51) Int. Cl.[5]: **B01D 19/04**, C11D 3/00

(21) Application number: **86305660.2**

(22) Date of filing: **23.07.86**

(54) **Improved silicone foam-control agent.**

(30) Priority: **01.10.85 GB 8524118**

(43) Date of publication of application:
**08.04.87 Bulletin 87/15**

(45) Publication of the grant of the patent:
**31.07.91 Bulletin 91/31**

(84) Designated Contracting States:
**AT BE DE FR GB IT NL**

(56) References cited:
**EP-A- 0 127 948**
**EP-A- 0 163 398**
**FR-A- 2 401 195**
**GB-A- 2 016 494**
**GB-A- 2 065 661**

(73) Proprietor: **Dow Corning Limited**
**Inveresk House 1 Aldywch**
**London WC2R 0HF(GB)**

(72) Inventor: **John, Vivian Brian**
**19 Smithies Avenue Sully**
**South Glamorgan Wales(GB)**
Inventor: **Sawicki, George Christopher**
**59 Redlands Road Penarth**
**South Glamorgan Wales(GB)**
Inventor: **Pope, Reginald**
**95 Princes Street Barry**
**South Glamorgan Wales(GB)**
Inventor: **Scampton, Robert James**
**21 Llandaff Road Canton**
**Cardiff South Glamorgan Wales(GB)**

(74) Representative: **Walbeoff, William John**
**Dow Corning Limited Cardiff Road Barry**
**South Glamorgan CF6 7YL Wales(GB)**

**EP 0 217 501 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention is concerned with silicone foam control compositions, with a method of making said foam control compositions and with detergent compositions containing them.

In many aqueous systems which are used e.g. in food processes, textile dying, paper production, sewage treatment and cleaning applications, surface active agents are present either as an unwanted ingredient of as deliberately introduced materials to achieve a certain function. Due to the presence of these surface active agents foam is often generated. In certain applications, such as in dish washing by hand, this is a welcome effect but in other applications foam generation can lead to unsatisfactory results. This is for example the case in the dyeing of textiles or in the manufacture of paper. In other applications, for example the use of detergent compositions for domestic laundering, the production of foam needs to be controlled rather than avoided. It is important to keep the foam formation to an acceptable level, especially when laundering is performed in automatic front loading washing machines. Excessive foam would cause overflow of the washing liquor onto the floor as well as reduction in the efficiency of the laundering operation itself.

Foam control compositions are known in such industries and have been incorporated into for example heavy duty detergent powders for use in automatic washing machines. Silicone antifoams are regarded as very effective in this application as they can be added in very small quantities and are not affected by e.g. the hardness of water, while traditional foam control compositions, such as soaps, require a certain water hardness for their effectiveness.

The detergent industry is currently going through an important evolution where, due to environmental concern and energy conservation efforts, there is a move towards the use of detergent compositions which will perform adequately at lower laundering temperatures. One way in which this is achieved is by the increase of the surfactant level in the detergent compositions. Anionic surfactants are especially favoured. Unfortunately these surfactants usually create more foam than for example the nonionic surfactants. Since silicone foam control compositions do not directly contribute to the cleaning power of a detergent composition it is desirable to keep the addition level of such foam control compositions to a minimum. There has therefore arisen a need to develop improved foam control compositions for incorporation in detergent compositions.

Foam control compositions useful in aqueous systems, are described for example in GB-A-1 110 207 which provides a method for reducing or preventing the foaming of aqueous systems which comprises incorporating therein a mixture consisting essentially of a dimethylpolysiloxane liquid, a siloxane resin composed of $(CH_3)_3SiO_{\frac{1}{2}}$ units and $SiO_2$ units and a silica aerogel. Other foam control compositions, for use e.g. in pulping processes are described in GB-A-1 296 308 where there is provided an antifoaming agent for aqueous systems comprising a mixture of (A) 100 parts by weight of a water insoluble organic liquid or solid which is a mineral oil, an ester of a carboxylic acid and a monohydric alcohol, an alcohol containing from 5 to 18 carbon atoms, a polyoxypropylene or polyoxybutylene glycol, a triorganophosphate, a vegetable oil, or sperm oil; (B) from 0.5 to 10.0 parts by weight of an organopolysiloxane compound which is a hydroxyl terminated dimethylpolysiloxane fluid having a viscosity of at least $3.5 \times 10^{-5}$ $m^2/s$ at 25°C or a benzene soluble organopolysiloxane resin comprising (1) $SiO_2$ units and (2) $R_3SiO_{\frac{1}{2}}$ units in which R is a monovalent hydrocarbon radical containing from 1 to 6 carbon atoms, and in which the ratio of (2) units to (1) units is from 1.2:1 to 0.6:1; (c) from 0.5 to 10.0 parts by weight of a filler which is a finely divided silica or a methylsilsesquioxane gel; and (D) from 0.002 to 5.0 parts by weight of a compound which is a hydrocarbon amine, ammonia, a disilazane of the formula

$$(CH_3)_3Si-\underset{\displaystyle H}{\underset{|}{N}}-Si(CH_3)_3$$

or a compound of the formula R'OH in which R' is an alkali metal or alkaline earth metal.

GB-A-1 496 011 discloses a combination of three organosilicon materials which when combined with mineral oil produce a defoaming composition. Said specification relates to a composition suitable for use in an oil-based defoamer consisting essentially of (1) from 55 to 96 percent by weight of a siloxane of the unit formula

$$CH_3Si(OCH_3)_xO_{\frac{3-x}{2}}$$

in which x is of such value that there is from 10 to 35 percent by weight of methoxy groups based on the weight of (1), (2) from 2 to 25 percent by weight of a hydrocarbon solvent soluble copolymer of $(CH_3)_3SiO_{\frac{1}{2}}$ units and $SiO_2$ units in which the mole ratio of $(CH_3)_3SiO_{\frac{1}{2}}$ units is in the range from 0.5/1 to 1.2/1 and (3) from 2 to 25 percent by weight of a silicon-bonded hydroxyl terminated methylpolysiloxane fluid containing a major proportion of dimethylsiloxane units, the proportions being in the percent by weight based on the combined weights of (1), (2) and (3). However, such defoaming compositions do not perform adequately in laundering operations using high foaming detergent compositions.

It is an object of the present invention to provide an improved silicone foam control composition for aqueous systems and, more particularly, for inclusion in high foaming detergent compositions.

The present invention accordingly provides a foam control composition comprising (A) a liquid siloxane component and (B) a finely divided filler having its surface rendered hydrophobic, characterised in that the liquid siloxane component (A) has a viscosity at 25° C of at least $7 \times 10^{-3}$ $m^2/s$ and is obtained by mixing (1) 100 parts by weight of a polydiorganosiloxane having triorganosiloxy end groups; (2) from 10 to 125 parts by weight of a polydiorganosiloxane having at least one terminal silanol group and at least 40 Si atoms, and (3) from 0.5 to 10 parts by weight of an organopolysiloxane resin comprising $R''_3SiO_{\frac{1}{2}}$ units and $SiO_2$ units in a ratio of from 0.5:1 to 1.2:1 and in which R" denotes a monovalent hydrocarbon group containing from 1 to 6 carbon atoms, said resin having on average at least one silicon-bonded hydroxyl group per molecule and thereafter heating the mixture.

Polydiorganosiloxanes (1) having triorganosiloxy end groups for use in the liquid siloxane component (A) are well known and commercially available and can be described by the general formula

$R\text{-}[Si(R_2)O]_n\text{-}SiR_3$

where each R independently denotes a monovalent hydrocarbon group or a substituted monovalent hydrocarbon group, having from 1 to 20 carbon atoms, and n is an integer. Examples of such monovalent hydrocarbon groups include alkyl groups for example methyl, ethyl, isobutyl, dodecyl, octadecyl and trifluoropropyl, alkenyl groups for example vinyl, allyl and cyclohexenyl, aryl groups for example phenyl, tolyl and chlorophenyl. Polydiorganosiloxanes (1) are substantially linear siloxanes but a minor amount of $RSiO_{3/2}$ units may be present where R is as defined above.

Preferably R is alkyl and most preferably polydiorganosiloxanes (1) having triorganosiloxy end groups are trimethylsiloxy endblocked polydimethylsiloxanes. They may be prepared by the simple conversion of dimethyldihalosilanes and trimethylhalosilanes to siloxanes by normal hydrolysis and condensation methods. Preferably the value of n is chosen so that the viscosity at 25° C of these siloxane polymers is in the range of from $10^{-4}$ $m^2/s$ to 1 $m^2/s$. The most preferred triorganosiloxy endblocked polydiorganosiloxanes (1) have a viscosity in the range of from $3 \times 10^{-4}$ $m^2/s$ to $6 \times 10^{-2}$ $m^2/s$.

Polydiorganosiloxanes (2) having at least one terminal silanol group for use in the liquid siloxane component (A) are also well known and commercially available materials and may be represented by the general formula

$R'_3SiO\text{-}[Si(R)_2O]_n\text{-}SiR'_3$

where R is as defined above and R' is either a hydroxyl group or R, at least one R' being a hydroxyl group, and n is at least 38. Preferred polydiorganosiloxanes (2) of this type have one hydroxyl group on each terminal Si atom. the value for n is less than 1500, and the R groups are alkyl groups containing 1 to 8 carbon atoms. In the more preferred polydiorganosiloxane (2) R is methyl and n has a value of from 400 to 1000, most preferably from about 500 to about 900. Polydiorganosiloxanes (2) are substantially linear polymers but a minor amount of $RSiO_{3/2}$, $SiO_2$ and/or $R_3SiO_{\frac{1}{2}}$ units may be present.

Organopolysiloxane resins (3) comprise $R''_3SiO_{\frac{1}{2}}$ units, where R" is as defined above, and $SiO_2$ units and have on average at least one silicon-bonded hydroxyl group per molecule. They are soluble in a hydrocarbon solvent, e.g. xylene and preferably have from 0.5 to 5% by weight of silicon-bonded hydroxyl groups. Most preferred organopolysiloxane resins (3) are the methylpolysiloxane resins which are well known and commercially available materials. They may be prepared by any method known in the art, for example by cohydrolysis and condensation of the corresponding silanes, e.g. $(CH_3)_3SiCl$ and $SiCl_4$.

Methods for preparing organopolysiloxanes resins (3) are described for example in British Patent Specification 706 719.

Liquid siloxane component (A) according to the invention has a viscosity at 25° C of at least 7 x $10^{-3}$ $m^2/s$. A lower viscosity does not result in the desired improvement in the foam controlling ability of the compositions. Preferably the viscosity at 25° C is in the range of from 1 x $10^{-2}$ $m^2/s$ to 3 x $10^{-2}$ $m^2/s$. Although liquid siloxanes having higher viscosities are operative, they are more difficult to handle during processing e.g. mixing.

The finely divided fillers (B) used in the foam control compositions of the present invention may be any of those inorganic fillers suitable for formulating foam control compositions. Such fillers are described in many patent applications. They include fumed $TiO_2$, $Al_2O_3$,aluminosilicates and $SiO_2$ with a surface area as measured by BET measurement of at least 50 $m^2/g$. Preferred fillers are silica fillers which can be made according to any of the standard manufacturing techniques for example thermal decomposition of a silicon halide, a decomposition and precipitation of a metal salt of silicic acid, e.g. sodium silicate, and a gel formation method. Suitable silicas for use in a foam control composition according to this invention include therefore fumed silica, precipitated silica and gel formation silica. The average particle size of these fillers may range from 0.1 to 20 $\mu$ but preferably is from 0.5 to 2.5 $\mu$.

The surface of filler particles (B) is rendered hydrophobic in order to make the foam control composition sufficiently effective in aqueous systems. Rendering the filler particles hydrophobic may be done either prior to or after dispersing the filler particles in the liquid siloxane component (A). This can be effected by pretreatment of the filler particles with reactive silanes or siloxanes, for example dimethyldichlorosilane, trimethylchlorosilane, hexamethyldisilazane, hydroxy-endblocked and methyl-endblocked polydimethylsiloxanes, and siloxane resins. Fillers which have already been treated with such compounds are commercially available from many companies, for example Sipernat D10 from Degussa. The surface of the filler may alternatively be rendered hydrophobic in situ, i.e. after the filler has been dispersed in the liquid siloxane component (A). This may be effected by adding to the liquid siloxane component (A) prior to, during or after the dispersion of the filler the appropriate amount of a hydrophobing agent, of the kind described above, and heating the mixture to a temperature above 40° C. The quantity of hydrophobing agent to be employed will depend for example on the nature of the agent and the filler and will be evident or ascertainable by those skilled in the art. Sufficient should be employed to endow the filler with at least a discernible degree of hydrophobicity.

In another aspect of the invention there is provided a method of making a foam control composition characterised in that the method comprises, (1) forming a mixture comprising (a) 100 parts by weight of a polydiorganosiloxane having triorganosiloxy end groups; (b) from 10 to 125 parts by weight of a polydiorganosiloxane having at least one terminal silanol group and at least 40 Si atoms, and (c) sufficient within the range from 0.5 to 10 parts by weight of an organopolysiloxane resin comprising $R''_3SiO_{\frac{1}{2}}$ units and $SiO_2$ units in a ratio of from 0.5:1 to 1.2:1 and in which R" denotes a monovalent hydrocarbon radical containing 1 to 6 carbon atoms, said resin having on average at least one silicon-bonded hydroxyl group per molecule in order to obtain a liquid siloxane component which, after the heating step (II), has a viscosity at 25° C of at least 7 x $10^{-3}$ $m^2/s$ and subsequently (II) heating the mixture obtained by step (I), and (III) adding thereto a finely divided filler having a surface which has been rendered hydrophobic or which is subsequently rendered hydrophobic by contact with a filler treating agent.

The first and second steps of the process of the invention may be carried out in any type of vessel which has mixing and heating facilities. The amount of polydiorganosiloxane (b) employed in the method of the invention is in the range of from 10 parts to 125 parts by weight per 100 parts by weight of polydiorganosiloxane (a). The amount of organopolysiloxane resin (c) used in the method of the invention will depend on the viscosity of the polydiorganosiloxanes (a) and (b) but is at least 0.5 part up to a maximum of 10 parts by weight per 100 parts of polydiorganosiloxane (a). Lower amounts of organopolysiloxane resin (c) lead to compositions of inferior foam controlling ability compared to foam control compositions according to the invention. Using higher levels than 10 parts tends to result in a gel structure and not a liquid siloxane. As a general indication, higher levels of the organopolysiloxane resin (c) are required with lower viscosity polydiorganosiloxanes (a) and (b). In addition to the essential ingredients there may be added an organic solvent for the organopolysiloxane resin. The resin may be present in such solvent before being mixed with the other ingredients of the liquid siloxane component. A suitable solvent is for example xylene. The amount of solvent added is not critical but is preferably kept to a minimum for environmental and economical reasons. Most preferably only sufficient solvent is added to maintain the organopolysiloxane resin in solution prior to its addition to the mixture. There may also be added to the mixture a catalyst which may be a condensation catalyst or equilibration catalyst. Suitable catalysts include alkali metal hydroxides, alkali metal alkoxides, alkali metal silanolates, metal salts of organic acids for

example tin, lead or zinc salts of such acids as dodecanoic acid, octanoic acid or acetic acid. Preferably these catalysts are added after the mixture has been heated to an elevated temperature, for example 75 to 150 °C. The heating stage (II) is preferably carried out in an inert atmosphere, for example under nitrogen. The temperature used in step (II) is dependent on the catalyst used but is preferably at least 80 °C. When the heating is completed the mixture may be cooled down, and any residual alkali catalyst is preferably neutralised. This can be done by mixing in stoichiometric or approximately stoichiometric amounts of any acid compound, for example acetic acid or hydrochloric acid.

Filler particles whereof the surface has been rendered hydrophobic may be mixed directly (step III) into the liquid siloxane mixture which was prepared in steps (I) and (II). Such hydrophobic particles may even be mixed in prior to ordering the carrying out of step (II). This mixing may be done by any conventional method but is preferably done by a homogenising method, using techniques which are well known in the art, for example mechanical or ultrasonic homogenisation. The admixing may be carried out at any convenient temperature in order to obtain a foam control composition according to the invention.

An untreated filler may be added, instead of or in addition to, a filler material which has been pretreated to render its surface hydrophobic. When an untreated filler filler is added a filler treating agent should also be included in the composition to render the surface of the untreated filler hydrophobic. Particularly suitable filler treating agents are organosilicon compounds of the type described hereinabove.

When an untreated filler is used it is particularly important that step (III) be carried out after the steps (I) and (II) are completed. Simultaneously carrying out steps (II) and (III) can lead to reaction between the filler particles and reactive ingredients of the liquid siloxane component in the mixture. Such reaction could affect the reproducibility and foam controlling ability of the foam control compositions and should thus be avoided. The mixture comprising the liquid siloxane component, the untreated filler and the filler treating agent should be heated subsequent to, or during, the mixing or homogenising stage to a temperature above 40 °C.

The amount of filler used to obtain a foam control composition according to the invention is not critical and may be in the range of from 2 to 20% by weight of the total foam control composition. Preferably from 3 to 15% of filler is used.

Optionally a liquid triorganosiloxy endblocked polydiorganosiloxane may also be added during step (III) of a method according to the invention. This liquid polydiorganosiloxane may be added separately, or as a mixture with a treated filler or with an untreated filler and a hydrophobing agent.

The foam control compositions of this invention are useful for reducing or preventing foam formation in aqueous systems. Such foam control compositions are particularly useful for reducing the foam generated by detergent compositions, especially during laundering operations. The foam control composition may be incorporated in a detergent composition in any of the known ways, for example in emulsion form or in a form wherein it is protected against degradation during for example storage, such as in encapsulated form. Such methods are well known in the art and have been disclosed in a number of patent specifications. The advantage of foam control compositions according to this invention is greatest when the composition is used in a detergent composition which has a high foaming ability. However, they can also be incorporated in other detergent compositions. Such detergent compositions are known in the art and are described in many patents.

The foam control compositions of the invention are therefore particularly useful when incorporated in those detergent compositions where a high level of high foaming surfactants is present, for example anionic surfactants, e.g. sodium dodecyl benzene sulphonate. High levels of anionic surfactants may be used to ensure effectiveness of detergent composition at lower washing temperatures, e.g. 40 °C.

In another aspect of the invention there is provided a detergent composition comprising (1) 100 parts by weight of a detergent component and (2) from 0.05 to 5 parts by weight of a foam control composition according to the invention.

Suitable detergent components comprise an active detergent, organic and inorganic builder salts and other additives and diluents. The active detergent may comprise organic detergent surfactants of the anionic, cationic, non-ionic or atmospheric type, or mixtures thereof. Suitable anionic organic detergent surfactants are alkali metal soaps of higher fatty acids, alkyl aryl sulphonates, for example sodium dodecyl benzene sulphonate; long chain (fatty) alcohol sulphates, olefine sulphates and sulphonates, sulphated monoglycerides, sulphated ethers, sulphosuccinates, alkane sulphonates, phosphate esters, alkyl isothionates, sucrose esters and fluorosurfactants. Suitable cationic organic detergent surfactants are alkylamine salts, quaternary ammonium salts, sulphonium salts and phosphonium salts. Suitable non-ionic organic surfactants are condensates of ethylene oxide with a long chain (fatty) alcohol or fatty acid, for example $C_{14-15}$ alcohol, condensed with 7 moles of ethylene oxide (Dobanol 45-7), condensates of ethylene oxide with an amine or an amide, condensation products of ethylene and propylene oxides, fatty acid alkylol

amides and fatty amine oxides. Suitable amphoteric organic detergent surfactants are imidazoline compounds, alkylaminoacid salts and betaines. Examples of inorganic components are phosphates and polyphosphates, silicates, such as sodium silicates, carbonates, sulphates, oxygen releasing compounds, such as sodium perborate and other bleaching agents and zeolites. Examples of organic components are anti-redeposition agents such as carboxy methyl cellulose (CMC), brighteners, chelating agents, such as ethylene diamine tetraacetic acid (EDTA) and nitrilotriacetic acid (NTA), enzymes and bacteriostats. Materials suitable for the detergent component are well known to the person skilled in the art, and are described in many text books, for example Synthetic Detergents, A. Davidsohn and B.M. Milwidsky, 6th edition, George Godwin (1978).

The following examples illustrate the invention. All parts and percentages are expressed by weight unless otherwise stated.

Example 1

To a glass flask, equipped with thermometer, stirrer, dropping funnel and inert gas supply, were added 64.33 parts of trimethylsiloxy endblocked polydimethylsiloxane having a viscosity at 25° C of $10^{-3}$ $m^2/s$, 32.17 parts of a hydroxy-endblocked polydimethylsiloxane having on average about 900 Si atoms per molecule, and 2.60 parts of a 70% solution in xylene of a polysiloxane resin having $(CH_3)_3SiO_{\frac{1}{2}}$ units and $SiO_2$ units in a ratio of from 0.5:1 to 1.2:1. The mixture was stirred at room temperature till it was well mixed and then it was heated to 115 to 120° C under nitrogen. When the mixture reached 115° C, 0.87 part of potassium silanolate was added and the temperature was held at 115 to 120° C for 30 minutes. (The potassium silanolate had been prepared by heating at 120° C 5 parts of KOH and 95 parts of polydimethylsiloxane having a viscosity at 25° C of $10^{-3}$ $m^2/s$). Then the mixture was allowed to cool down to 40° C and 0.046 part of glacial acetic acid was added and stirred in to ensure complete neutralisation. Thus a first liquid siloxane component was obtained which had a viscosity of 11.5 x $10^{-3}$ $m^2/s$ at 25° C. 95 parts of the first liquid siloxane component as prepared above were then mixed with 5 parts of hydrophobic silica Sipernat D10, supplied by Degussa, and a foam control composition (1) was obtained having a viscosity of 19.2 x $10^{-3}$ $m^2/s$ at 25° C.

Example 2

Using a high shear mixer 92.5 parts of the first liquid siloxane component, as prepared in Example 1, were mixed with 5 parts of a silica Syloid 244 (W.R. Grace Limited) and 2.5 parts of hexamethyldisilazane. The mixture was heated to 120° C for 4 hours under reflux conditions and for a further 1 hour at 120° C under reduced pressure (4 x $10^3$ Pa) to remove any $H_2O$ and volatiles. After allowing the mixture to cool down a foam control composition (2), according to the invention, was obtained having a viscosity at 25° C of 19.8 x $10^{-3}$ $m^2/s$.

Example 3

A liquid siloxane component was prepared as in Example 1 except that 63.82 parts of the trimethylsiloxy endblocked polydimethylsiloxane, 31.37 parts of a hydroxy endblocked polydimethylsiloxane having on average about 500 Si atoms in the chain, and 3.35 parts of the polysiloxane resin solution were utilised. A second liquid siloxane component was obtained having a viscosity of 16.9 x $10^{-3}$ $m^2/s$ at 20 25° C. 95 parts of the second liquid siloxane component were mixed with 5 parts of Sipernat D10 and a foam control compositions (3), according to the invention, was obtained having a viscosity of 24.2 x $10^{-3}$ $m^2/s$ at 25° C.

Example 4

A liquid siloxane component was prepared as in Example 1 except that 62.74 parts of the trimethylsiloxy endblocked polydimethylsiloxane, 31.37 parts of a hydroxy endblocked polydimethylsiloxane having on average about 450 Si atoms in the chain, and 5.00 parts of the polysiloxane resin solution were utilised. A third liquid siloxane component was obtained having a viscosity of 10.7 x $10^{-3}$ $m^2/s$ at 25° C. 95 parts of the third liquid siloxane component were mixed with 5 parts of Sipernat D10 and a foam control composition (4), according to the invention, was obtained having a viscosity of 12.7 x $10^{-3}$ $m^2/s$ at 25° C.

Example 5

A liquid siloxane component was prepared as in Example 1 except that 47.87 parts of the trimethylsiloxy endblocked polydimethylsiloxane, 47.87 parts of a hydroxy endblocked polydimethylsiloxane having on average about 450 Si atoms in the chain, and 3.35 parts of the polysiloxane resin solution were utilised. A fourth liquid siloxane component was obtained having a viscosity of 20.8 x $10^{-3}$ $m^2/s$ at 25° C. 95 parts of the fourth liquid siloxane component were mixed with 5 parts of Sipernat D10 and a foam control composition (5), according to the invention, was obtained having a viscosity of 23.9 x $10^{-3}$ $m^2/s$ at 25° C.

Example 6

A liquid siloxane component was prepared as described in Example 1 except that 54.55 parts of the trimethylsiloxy endblocked polydimethylsiloxane, 42.48 parts of the hydroxy endblocked polydimethylsiloxane and 2.05 parts of the polysiloxane resin solution were used. A fifth liquid siloxane component, having a viscosity at 25° C or 17.8 x $10^{-3}$ $m^2/s$ was obtained, and was mixed with 5 parts of Sipernat D10 to give a foam control composition (6) having a viscosity of 25.6 x $10^{-3}$ $m^2/s$ at 25° C.

Comparative Example

A liquid siloxane component was prepared as described in Example 1 except that 95.74 parts of the trimethylsiloxy endblocked polydimethylsiloxane, no hydroxy endblocked polydimethylsiloxane and 3.35 parts of the polysiloxane resin solution were used to obtain a sixth liquid siloxane component having a viscosity of 1.35 x $10^{-3}$ $m^2/s$ at 25° C. 95 parts of the sixth liquid siloxane component were mixed with 5 parts of Sipernat D10 and gave a comparative foam control composition (C), having a viscosity of 2.2 x $10^{-3}$ $m^2/s$ at 25° C.

Foam Control Testing

A conventional automatic washing machine (Miele 427) of the front loading type, having a transparent loading door was loaded with 3.5 kg of clean cotton fabric. A wash cycle with a prewash and a main wash (95° C) was carried out using one lot of detergent powder for each of the prewash and the main wash.

Each lot of detergent powder consisted of 100g of a high foaming detergent powder which is believed to comprise linear alkyl sulphonate, $C_{14\text{-}15}$ OXO alcohol - 7EO, alkyl dimethylamine oxide, silicate, sodium tripolyphosphate, sodium perborate and sodium sulphate and of an amount of a foam control composition as specified in Table I below. The door of the washing machine was divided in its height by a scale of from 0 to 100% intervals. The foam height during the wash cycle was recorded after about 65, 70 and 75 minutes from the beginning of the wash cycle. The recording was done when the rotation drum of the washing machine was stationery. Higher values indicate a higher foam level and thus a worse performance of the foam control composition. The test results are as indicated in Table I.

TABLE I

Foam Height After 65,70,75 minutes

| Foam Control Composition | Addition Level to Detergent Powder | |
|---|---|---|
| | 0.3% | 0.5% |
| (1) | -,-,-, | 10,10,20 |
| (2) | 60,75,95 | 30,45,60 |
| (3) | 20,40,70 | 0,0,0 |
| (4) | 100,100,100 | 0,15,30 |
| (5) | 100,100,100 | 0,10,25 |
| (6) | 95,100,100 | 50,45,40 |
| (C) | -,-,- | 95,100,100 |

A value of 100 indicates that the foam level was so high that it caused the washing liquor to overflow out of an opening at the top of the washing machine. It can be seen that foam control compositions (1), (2), (3), (4), (5) and (6) according to the invention perform better than the comparative composition (C).

## Claims

**Claims for the following Contracting States : BE, DE, FR, GB, IT, NL**

1. A foam control composition comprising (A) a liquid siloxane component and (B) a finely divided filler having its surface rendered hydrophobic, characterised in that the liquid siloxane component (A) has a viscosity at 25°C of at least $7 \times 10^{-3}$ $m^2/s$ and is obtained by mixing (1) 100 parts by weight of a polydiorganosiloxane having triorganosiloxy end groups, (2) from 10 to 125 parts by weight of a polydiorganosiloxane having at least one terminal silanol group and at least 40 Si atoms, and (3) from 0.5 to 10 parts by weight of an organopolysiloxane resin comprising $R''_3SiO_{0.5}$ units and $SiO_2$ units in a ratio of from 0.5:1 to 1.2:1 and in which R" denotes a monovalent hydrocarbon group containing from 1 to 6 carbon atoms, said resin having on average at least one silicon-bonded hydroxyl group per molecule, and thereafter heating the mixture.

2. A foam control composition according to Claim 1 further characterised in that polydiorganosiloxane (1) is a trimethylsiloxy endblocked polydimethylsiloxane.

3. A foam control composition according to either one of Claims 1 or 2 further characterised in that polydiorganosiloxane (1) has a viscosity at 25°C in the range of $3 \times 10^{-4}$ $m^2/s$ to $6 \times 10^{-2}$ $m^2/s$.

4. A foam control composition according to any one of the preceding claims further characterised in that polydiorganosiloxane (2) has one hydroxyl group on each terminal silicon atom, substantially all other substituents are alkyl radicals containing from 1 to 8 carbon atoms and has from 400 to 1000 silicon atoms in the siloxane chain.

5. A foam control composition according to any one of the preceding claims further characterised in that polydiorganosiloxane (2) has from 500 to 900 silicon atoms in the siloxane chain.

6. A foam control composition according to any one of the preceding claims further characterised in that liquid siloxane component (A) has a viscosity at 25°C of from $1 \times 10^{-2}$ $m^2/s$ to $3 \times 10^{-2}$ $m^2/s$.

7. A foam composition according to any one of the preceding claims further characterised in that from 3 to 15 percent by weight of filler is used based on the total weight of the foam control composition.

8. A method of making a foam control composition according to any one of the previous claims characterised in that the method comprises (I) forming a mixture comprising (a) 100 parts by weight of a polydiorganosiloxane having triorganosiloxy end groups, (b) from 10 to 125 parts by weight of a polydiorganosiloxane having at least one terminal silanol group and at least 40 Si atoms, and (c) sufficient within the range from 0.5 to 10 parts by weight of an organopolysiloxane resin comprising $R''_3SiO_{0.5}$ units and $SiO_2$ units in a ratio of from 0.5:1 to 1.2:1 and in which R" denotes a monovalent hydrocarbon group containing from 1 to 6 carbon atoms, said resin having on average at least one silicon-bonded hydroxyl group per molecule in order to obtain a liquid siloxane component which, after the heating step (II), has a viscosity at 25°C of at least $7 \times 10^{-3}$ $m^2/s$ and subsequently (II) heating the mixture obtained by step] (I) and (III) adding thereto a finely divided filler having a surface which has been rendered hydrophobic by contact with a filler treating agent.

9. A method for making foam control composition according to Claim 8 further characterised in that there is added a catalyst during step (II).

10. A detergent composition comprising (1) 100 parts by weight of a detergent component and (2) from 0.05 to 5 parts by weight of a foam control composition characterised in that the foam control composition is according to any one of Claims 1 to 7.

11. A detergent composition comprising (1) 100 parts by weight of a detergent component and (2) from 0.05 to 5 parts by weight of a foam control composition according to any one of Claims 1 to 7 further

characterised in that at least a part of the foam control composition is encapsulated.

**Claims for the following Contracting State : AT**

1. A method of making a foam control composition characterised in that the method comprises (I) forming a mixture comprising (a) 100 parts by weight of a polydiorganosiloxane having triorganosiloxy end groups, (b) from 10 to 125 parts by weight of a polydiorganosiloxane having at least one terminal silanol group and at least 40 Si atoms, and (c) sufficient in range from 0.5 to 10 parts by weight of an organopolysiloxane resin comprising $R''_3SiO_{0.5}$ units and $SiO_2$ units in a ratio of from 0.5:1 to 1.2:1 and in which R" denotes a monovalent hydrocarbon group containing from 1 to 6 carbon atoms, said resin having on average at least one silicon-bonded hydroxyl group per molecule in order to obtain a liquid siloxane component which, after the heating step (II), has a viscosity at 25°C of at least $7 \times 10^{-3}$ $m^2/s$ and subsequently (II) heating the mixture obtained by step (I) and (III) adding thereto a finely divided filler having a surface which has been rendered hydrophobic or which is subsequently rendered hydrophobic by contact with a filler treating agent.

2. A method for making a foam control composition according to Claim 1 further characterised in that polydiorganosiloxane (a) is a trimethylsiloxy endblocked polydimethylsiloxane.

3. A method for making a foam control composition according to either one of Claims 1 or 2 further characterised in that polydiorganosiloxane (a) has a viscosity at 25°C in the range of $3 \times 10^{-4}$ $m^2/s$ to $6 \times 10^{-2}$ $m^2/s$.

4. A method for making a foam control composition according to any one of the preceding claims further characterised in that polydiorganosiloxane (b) has one hydroxyl group on each terminal silicon atom, substantially all other substituents are alkyl radicals containing from 1 to 8 carbon atoms and has from 400 to 1000 silicon atoms in the siloxane chain.

5. A method for making a foam control composition according to any one of the preceding claims further characterised in that in polydiorganosiloxane (b) has from 500 to 900 silicon atoms in the siloxane chain.

6. A method of making a foam control composition according to any one of the preceding claims further characterised in that liquid siloxane component obtained by steps (I) and (II) has a viscosity at 25°C of from $1 \times 10^{-2}$ $m^2/s$ to $3 \times 10^{-2}$ $m^2/s$.

7. A method of making a foam control composition according to any one of the preceding claims further characterised in that from 3 to 15 percent by weight of filler is used based on the total weight of the foam control composition.

8. A method for making a foam control composition according to any one of the preceding claims further characterised in that there is added a catalyst during step (II).

**Revendications**

**Revendications pour les Etats contractants suivants : BE, DE, FR, GB, IT, NL**

1. Une composition antimousse comprenant (A) un composant siloxane liquide et (B) une charge finement divisée dont la surface a été rendue hydrophobe, caractérisée en ce que le composant siloxane liquide (A) a une viscosité à 25°C d'au moins $7 \times 10^{-3}$ $m^2/s$ et est obtenu en mélangeant (1) 100 parties en poids d'un polydiorganosiloxane ayant des groupes triorganosiloxy terminaux, (2) 10 à 125 parties en poids d'un polydiorganosiloxane ayant au moins un groupe silanol terminal et au moins 40 atomes de Si, et (3) 0,5 à 10 parties en poids d'une résine d'organopolysiloxane comprenant des motifs $R''_3SiO_{0,5}$ et des motifs $SiO_2$ en un rapport de 0,5:1 à 1,2:1 et où R" représente un groupe hydrocarboné monovalent contenant 1 à 6 atomes de carbone, ladite résine ayant en moyenne au moins un groupe hydroxyle lié au silicium par molécule, puis en chauffant le mélange.

2. Une composition antimousse selon la revendication 1, caractérisée de plus en ce que le polydiorganosiloxane (1) est un polydiméthylsiloxane à extrémités bloquées par des groupes triméthylsiloxy.

3. Une composition antimousse selon l'une ou l'autre des revendications 1 et 2, caractérisée de plus en ce que le polydiorganosiloxane (1) a une viscosité à 25° C comprise dans l'intervalle de 3 x $10^{-4}$ $m^2/s$ à 6 x $10^{-2}$ $m^2/s$.

4. Une composition antimousse selon l'une quelconque des revendications précédentes, caractérisée de plus en ce que le polydiorganosiloxane (2) comporte un groupe hydroxyle sur chaque atome de silicium terminal, sensiblement tous les autres substituants sont des radicaux alkyles contenant 1 à 8 atomes de carbone et il compte 400 à 1000 atomes de silicium dans sa chaîne siloxanique.

5. Une composition antimousse selon l'une quelconque des revendications précédentes, caractérisée de plus en ce que le polydiorganosiloxane (2) compte 500 à 900 atomes de silicium dans sa chaîne siloxanique.

6. Une composition antimousse selon l'une quelconque des revendications précédentes, caractérisée de plus en ce que le composant siloxane liquide (A) a une viscosité à 25° C de 1 x $10^{-2}$ $m^2/s$ à 3 x $10^{-2}$ $m^2/s$.

7. Une composition antimousse selon l'une quelconque des revendications précédentes, caractérisée de plus en ce que 3 à 15 pour cent en poids de charge sont utilisés par rapport au poids total de la composition antimousse.

8. Un procédé pour fabriquer une composition antimousse selon l'une quelconque des revendications précédentes, caractérisé en ce que le procédé consiste à (I) former un mélange comprenant (a) 100 parties en poids d'un polydiorganosiloxane ayant des groupes triorganosiloxy terminaux, (b) 10 à 125 parties en poids d'un polydiorganosiloxane ayant au moins un groupe silanol terminal et au moins 40 atomes de Si, et (c) une quantité suffisante, dans l'intervalle de 0,5 à 10 parties en poids, d'une résine d'organopolysiloxane comprenant des motifs $R''_3SiO_{0,5}$ et des motifs $SiO_2$ en un rapport de 0,5:1 à 1,2:1 et où R" représente un groupe hydrocarboné monovalent contenant 1 à 6 atomes de carbone, ladite résine ayant en moyenne au moins un groupe hydroxyle lié au silicium par molécule, pour obtenir un composant siloxane liquide qui, après l'étape de chauffage (II), possède une viscosité à 25° C d'au moins 7 x $10^{-3}$ $m^2/s$, puis (II) chauffer le mélange obtenu par l'étape (I), et (III) y ajouter une charge finement divisée dont la surface a été rendue hydrophobe ou est ensuite rendue hydrophobe par mise en contact avec un agent de traitement de charge.

9. Un procédé pour fabriquer une composition antimousse selon la revendication 8, caractérisé de plus en ce qu'un catalyseur est ajouté pendant l'étape (II).

10. Une composition détergente comprenant (1) 100 parties en poids d'un composant détergent et (2) 0,05 à 5 parties en poids d'une composition antimousse, caractérisée en ce que la composition antimousse est selon l'une quelconque des revendications 1 à 7.

11. Une composition détergente comprenant (1) 100 parties en poids d'un composant détergent et (2) 0,05 à 5 parties en poids d'une composition antimousse selon l'une quelconque des revendications 1 à 7, caractérisée de plus en ce qu'une partie au moins de la composition antimousse est encapsulée.

**Revendications pour l'Etat contractant suivant : AT**

1. Un procédé pour fabriquer une composition antimousse, caractérisé en ce que le procédé consiste à (I) former un mélange comprenant (a) 100 parties en poids d'un polydiorganosiloxane ayant des groupes triorganosiloxy terminaux, (b) 10 à 125 parties en poids d'un polydiorganosiloxane ayant au moins un groupe silanol terminal et au moins 40 atomes de Si, et (c) une quantité suffisante, dans l'intervalle de 0,5 à 10 parties en poids, d'une résine d'organopolysiloxane comprenant des motifs $R''_3SiO_{0,5}$ et des motifs $SiO_2$ en un rapport de 0,5:1 à 1,2:1 et où R" représente un groupe hydrocarboné monovalent contenant 1 à 6 atomes de carbone, ladite résine ayant en moyenne au moins un groupe hydroxyle lié au silicium par molécule, pour obtenir un composant siloxane liquide qui, après l'étape de chauffage (II), possède une viscosité à 25° C d'au moins 7 x $10^{-3}$ $m^2/s$, puis (II) chauffer le mélange obtenu par l'étape (I), et (III) y ajouter une charge finement divisée dont la surface a été rendue hydrophobe ou est ensuite rendue hydrophobe par mise en contact avec un agent de traitement de charge.

2. Un procédé pour fabriquer une composition antimousse selon la revendication 1, caractérisé de plus en ce que le polydiorganosiloxane (a) est un polydiméthylsiloxane à extrémités bloquées par des groupes triméthylsiloxy.

3. Un procédé pour fabriquer une composition antimousse selon l'une ou l'autre des revendications 1 et 2, caractérisé de plus en ce que le polydiorganosiloxane (a) a une viscosité à 25°C comprise dans l'intervalle de $3 \times 10^{-4}$ $m^2/s$ à $6 \times 10^{-2}$ $m^2/s$.

4. Un procédé pour fabriquer une composition antimousse selon l'une quelconque des revendications précédentes, caractérisé de plus en ce que le polydiorganosiloxane (b) comporte un groupe hydroxyle sur chaque atome de silicium terminal, sensiblement tous les autres substituants sont des radicaux alkyles contenant 1 à 8 atomes de carbone et il compte 400 à 1000 atomes de silicium dans sa chaîne siloxanique.

5. Un procédé pour fabriquer une composition antimousse selon l'une quelconque des revendications précédentes, caractérisé de plus en ce que le polydiorganosiloxane (b) compte 500 à 900 atomes de silicium dans sa chaîne siloxanique.

6. Un procédé pour fabriquer une composition antimousse selon l'une quelconque des revendications précédentes, caractérisé de plus en ce que le composant siloxane liquide obtenu par les étapes (1) et (II) a une viscosité à 25°C de $1 \times 10^{-2}$ $m^2/s$ à $3 \times 10^{-2}$ $m^2/s$.

7. Un procédé pour fabriquer une composition antimousse selon l'une quelconque des revendications précédentes, caractérisé de plus en ce que 3 à 15 pour cent en poids de charge sont utilisés par rapport au poids total de la composition antimousse.

8. Un procédé pour fabriquer une composition antimousse selon l'une quelconque des revendications précédentes, caractérisé de plus en ce qu'un catalyseur est ajouté pendant l'étape (II).

**Patentansprüche**
**Patentansprüche für folgende Vertragsstaaten : BE, DE, FR, GB, IT, NL**

1. Schaumkontrollzusammensetzung, umfassend (A) eine flüssige Siloxankomponente und (B) einen feinverteilten Füllstoff, dessen Oberfläche hydrophob gemacht wurde, dadurch gekennzeichnet, daß die flüssige Siloxankomponente (A) eine Viskosität von mindestens $7 \times 10^{-3}$ $m^2/s$ bei 25°C hat und erhalten wird, indem (1) 100 Gewichtsteile Polydiorganosiloxan mit Triorganosiloxyendgruppen, (2) 10 bis 125 Gewichtsteile Polydiorganosiloxan mit mindestens einer endständigen Silanolgruppe und mindestens 40 Si-Atomen und (3) 0,5 bis 10 Gewichtsteile Organopolysiloxanharz, das $R''_3SiO_{0,5}$-Einheiten und $SiO_2$-Einheiten in einem Verhältnis von 0,5:1 bis 1,2:1 enthält und worin R" einen monovalenten Kohlenwasserstoffrest mit 1 bis 6 Kohlenstoffatomen bedeutet, wobei das Harz im Durchschnitt mindestens eine siliciumgebundene Hydroxylgruppe pro Molekül aufweist, mischt und anschließend die Mischung erhitzt.

2. Schaumkontrollzusammensetzung nach Anspruch 1, dadurch gekennzeichnet, daß das Polydiorganosiloxan (1) ein Polydimethylsiloxan mit Trimethylsiloxyendgruppen ist.

3. Schaumkontrollzusammensetzung nach einem der Ansprüche 1 oder 2, dadurch gekennzeichnet, daß das Polydiorganosiloxan (1) eine Viskosität bei 25°C im Bereich von $3 \times 10^{-4}$ $m^2/s$ bis $6 \times 10^{-2}$ $m^2/s$ hat.

4. Schaumkontrollzusammensetzung nach einem der vorhergehenden Ansprüche, dadurch gekennzeichnet, daß das Polydiorganosiloxan (2) eine Hydroxylgruppe an jedem endständigen Siliciumatom hat, daß im wesentlichen alle anderen Substituenten Alkylreste mit 1 bis 8 Kohlenstoffatomen sind und daß es 400 bis 1000 Siliciumatome in der Siloxankette aufweist.

5. Schaumkontrollzusammensetzung nach einem der vorhergehenden Ansprüche, dadurch gekennzeichnet, daß das Polydiorganosiloxan (2) 500 bis 900 Siliciumatome in der Siloxankette aufweist.

6. Schaumkontrollzusammensetzung nach einen der vorhergehenden Ansprüche, dadurch gekennzeichnet, daß die flüssige Siloxankomponente (A) eine Viskosität von 1 x $10^{-2}$ $m^2/s$ bis 3 x $10^{-2}$ $m^2/s$ bei 25° C hat.

7. Schaumkontrollzusammensetzung nach einem der vorhergehenden Ansprüche, dadurch gekennzeichnet, daß 3 bis 15 Gew.-% Füllstoff, bezogen auf das Gesamtgewicht der Schaumkontrollzusammensetzung, verwendet werden.

8. Verfahren zur Herstellung einer Schaumkontrollzusammensetzung nach einem der vorhergehenden Ansprüche, dadurch gekennzeichnet, daß (I) eine Mischung gebildet wird, die (a) 100 Gewichtsteile eines Polydiorganosiloxans mit Triorganosiloxyendgruppen, (b) 10 bis 125 Gewichtsteile eines Polydiorganosiloxans mit mindestens einer endständigen Silanolgruppe und mindestens 40 Si-Atomen und (c) eine genügende Menge innerhalb des Bereichs von 0,5 bis 10 Gewichtsteilen eines Organopolysiloxanharzes, das $R''_3SiO_{0,5}$-Einheiten und $SiO_2$-Einheiten in einem Verhältnis von 0,5:1 bis 1,2:1 enthält und worin R" einen monovalenten Kohlenwasserstoffrest mit 1 bis 6 Kohlenstoffatomen bezeichnet, wobei das Harz im Durchschnitt mindestens eine siliciumgebundene Hydroxylgruppe pro Molekül aufweist, enthält, um eine flüssige Siloxankomponente zu erhalten, die nach der Erhitzungsstufe (II) eine Viskosität von mindestens 7 x $10^{-3}$ $m^2/s$ bei 25° C hat, und anschließend (II) die Mischung, die in Stufe (I) erhalten wurde, erhitzt, und (III) einen feinverteilten Füllstoff zugibt mit einer Oberfläche, die hydrophob gemacht wurde oder die anschließend durch Kontakt mit einem Füllstoffbehandlungsmittel hydrophob gemacht wird.

9. Verfahren zur Herstellung einer Schaumkontrollzusammensetzung nach Anspruch 8, dadurch gekennzeichnet, daß während der Stufe (II) ein Katalysator zugegeben wird.

10. Detergenzzusammensetzung, enthaltend (1) 100 Gewichtsteile einer Detergenzkomponente und (2) 0,05 bis 5 Gewichtsteile einer Schaumkontrollzusammensetzung, dadurch gekennzeichnet, daß sie eine Schaumkontrollzusammensetzung nach einem der Ansprüche 1 bis 7 enthält.

11. Detergenzzusammensetzung, enthaltend (1) 100 Gewichtsteile einer Detergenzkomponente und (2) 0,05 bis 5 Gewichtsteile einer Schaumkontrollzusammensetzung nach einem der Ansprüche 1 bis 7, dadurch gekennzeichnet, daß mindestens ein Teil der Schaumkontrollzusammensetzung eingekapselt vorliegt.

**Patentansprüche für folgenden Vertragsstaat : AT**

1. Verfahren zur Herstellung einer Schaumkontrollzusammensetzung, dadurch gekennzeichnet, daß (I) eine Mischung gebildet wird, die (a) 100 Gewichtsteile eines Polydiorganosiloxans mit Triorganosiloxyendgruppen, (b) 10 bis 125 Gewichtsteile eines Polydiorganosiloxans mit mindestens einer endständigen Silanolgruppe und mindestens 40 Si-Atomen und (c) eine genügende Menge innerhalb des Bereichs von 0,5 bis 10 Gewichtsteilen eines Organopolysiloxanharzes, das $R''_3SiO_{0,5}$-Einheiten und $SiO_2$-Einheiten in einem Verhältnis von 0,5:1 bis 1,2:1 enthält und worin R" einen monovalenten Kohlenwasserstoffrest mit 1 bis 6 Kohlenstoffatomen bezeichnet, wobei das Harz im Durchschnitt mindestens eine siliciumgebundene Hydroxylgruppe pro Molekül aufweist, enthält, um eine flüssige Siloxankomponente zu erhalten, die nach der Erhitzungsstufe (II) eine Viskosität von mindestens 7 x $10^{-3}$ $m^2/s$ bei 25° C hat, und anschließend (II) die Mischung, die in Stufe (I) erhalten wurde, erhitzt, und (III) einen feinverteilten Füllstoff zugibt mit einer Oberfläche, die hydrophob gemacht wurde oder die anschließend durch Kontakt mit einem Füllstoffbehandlungsmittel hydrophob gemacht wird.

2. Verfahren zur Herstellung einer Schaumkontrollzusammensetzung nach Anspruch 1, dadurch gekennzeichnet, daß das Polydiorganosiloxan (a) ein Polydimethylsiloxan mit Trimethylsiloxyendgruppen ist.

3. Verfahren zur Herstellung einer Schaumkontrollzusammensetzung nach einem der Ansprüche 1 oder 2, dadurch gekennzeichnet, daß das Polydiorganosiloxan (a) eine Viskosität im Bereich von 3 x $10^{-4}$ $m^2/s$ bis 6 x $10^{-2}$ $m^2/s$ bei 25° C hat.

4. Verfahren zur Herstellung einer Schaumkontrollzusammensetzung nach einem der vorhergehenden Ansprüche, dadurch gekennzeichnet, daß das Polydiorganosiloxan (b) eine Hydroxylgruppe an jedem

endständigen Siliciumatom hat, daß im wesentlichen alle anderen Substituenten Alkylreste mit 1 bis 8 Kohlenstoffatomen sind und daß 400 bis 1000 Siliciumatome in der Siloxankette vorhanden sind.

**5.** Verfahren zur Herstellung einer Schaumkontrollzusammensetzung nach einem der vorhergehenden Ansprüche, dadurch gekennzeichnet, daß das Polydiorganosiloxan (b) 500 bis 900 Siliciumatome in der Siloxankette hat.

**6.** Verfahren zur Herstellung einer Schaumkontrollzusammensetzung nach einem der vorhergehenden Ansprüche, dadurch gekennzeichnet, daß die flüssige Siloxankomponente, die in den Stufen (I) und (II) erhalten wird, eine Viskosität von 1 x $10^{-2}$ $m^2/s$ bis 3 x $10^{-2}$ $m^2/s$ bei 25 °C hat.

**7.** Verfahren zur Herstellung einer Schaumkontrollzusammensetzung nach einem der vorhergehenden Ansprüche, dadurch gekennzeichnet, daß 3 bis 15 Gew.-% Füllstoff, bezogen auf das Gesamtgewicht der Schaumkontrollzusammensetzung, verwendet werden.

**8.** Verfahren zur Herstellung einer Schaumkontrollzusammensetzung nach einem der vorhergehenden Ansprüche, dadurch gekennzeichnet, daß während Stufe (II) ein Katalysator zugegeben wird.